# EUROPEAN PATENT APPLICATION

(11) **EP 2 503 480 A1**
(43) Date of publication of application: **26.09.2012**
(21) Application number: 11159245.7
(22) Date of filing: 22.03.2011
(51) Int. Cl.: G06F 21/00

(54) **Method and devices for secure data access and exchange**

(71) Applicant: Smals Vzw, 1060 Brussel (BE)
(72) Inventor: Robben, Frank Paul Jozef, 3020, Herent (BE); Cathalo, Julien, 1348, Louvain-la-Neuve (BE); Loeckx, Johan, 1190, Vorst (BE)
(74) Representative: Van den Boeck, Wim

(57) **Abstract**

A method for retrieving data available on a second device by a first device, comprising
- sending a read request to second device,
- receiving encrypted data, the encrypted data being encrypted by means of a random session key, from second device;
- receiving an encrypted random session key, the random session key being encrypted by means of a public encryption key;
- transmitting the encrypted random session key to a plurality P partial decryption devices for performing partial decryption by each of the partial decryption devices, decryption based on respective private key stored in each of partial decryption servers;
- receiving respective partial decryptions of the random session key from at least T of the P partial decryption servers;
- deriving the random session key, based on received respective partial decryptions;
- decrypting the received encrypted data, based on derived random session key; and method for storing data.

## Description

### Technical field of the invention

The present invention relates to the field of methods and devices for secure data access and data exchange.

### Background of the invention

Keeping medical files comprising information on the medical history of a patient is common practice since a long time. These files were originally handwritten files kept at the office of the physician or other medical service provider. Today these files are typically also managed in digital format by storing information on computers and digital recording media.

Society has evolved, and many individuals no longer stay with the same medical service provider, because of different reasons. Also typically different medical experts provide information about the same patient.

Modern information and communication technologies also easily allow the exchange of data over a network between different network entities.

Privacy regulations are very strict with respect to medical file information for individuals, and therefore a high level privacy protection is required.

This is not only the case in the medical field, but may be applied in any field wherein sensitive data has to be shared between certain parties, as for instance in the financial sector, or in any confidential data archiving solutions.

This would typically map into technically very complex methods and systems, when one would try to comply to these requirements.

There is a need for alternative systems for secure data access and data exchange, which are secure, relatively simple, and scalable.

### Summary of the invention

For the purpose of the present invention, the following terminology has been used:
- A symmetric encryption scheme: A kind of encryption and decryption mechanism where the same key is used to encrypt and decrypt messages.
- An asymmetric encryption scheme: A kind of encryption and decryption mechanism where each user has two keys (public key and private key). The public key of a user, which can be made public, is used to encrypt messages intended to this user. The private key is kept secret by the user and allows to decrypt messages that were encrypted with the corresponding public key.
- A threshold encryption scheme: a kind of encryption and decryption mechanism where decryption is distributed amongst several entities. A public encryption key is used to encrypt messages intended to the set of entities. Each entity owns a distinct private key, and a number (set in advance) of these entities can collaborate to decrypt a message that was encrypted with the public encryption key.
- A random session key: A key that is generated for instance by using a pseudorandom number generator and that is used by an encryption algorithm to encrypt data. Each piece of data should be encrypted with a distinct random session key.
- A trusted third party: in a security system, a trusted third party is an entity which is trusted by the parties involved.
- A semi trusted third party is an entity that the parties involved trust to a certain extent. A security system with semi trusted third parties is designed in such a way that if one or more, depending on system design, semi trusted third party/ies is/are compromised, it does not compromise the security of the whole system.

It is an object of the present invention to provide a method which solves at least one of the above problems.

According to a first aspect of the present invention, a method is described for retrieving data available on a second device by a first device, comprising
- sending a read request to the second device, the read request comprising data identification information;
- receiving encrypted data associated to the data identification information, the encrypted data being encrypted by means of a first random session key, from the second device;
- receiving an encrypted first random session key, the first random session key being encrypted by means of a public encryption key;
- transmitting the encrypted first random session key to a plurality P (of at least two, P being a natural number) partial decryption devices for performing partial decryption by each of the partial decryption devices, the decryption based on a respective private key stored in each of the partial decryption servers;
- receiving respective partial decryptions of the first random session key from at least T (T being a natural number) of the P partial decryption servers;
- deriving the first random session key, based on the received respective partial decryptions;
- decrypting the received encrypted data, based on the derived first random session key.

The first device can for instance be a computer. The second device can be a data storage server. This data storage can be present in the cloud, i.e. on the internet. A data storage server may represent a single server or a plurality of aggregated data storage servers which are virtually linked together.

According to preferred embodiments, the method further comprises authenticating the first device to access the second device. The authentication may comprise:
- authenticating the first device with an authentication device;
- receiving a token from the authentication device;
- forwarding the token to the second device before or together with sending the read request.

According to preferred embodiments of the present invention, the public encryption key is of the threshold encryption type. The relation between the public encryption key and P private keys of the partial decryption devices is predetermined such that information encrypted with the public encryption key can be decrypted based on only T out of the P (T<=P) private keys. Preferably, no information can be retrieved from the data if less than T of the P private keys can be used.

According to certain embodiments P equals T. According to preferred embodiments, P and T may be equal to two.

According to a second aspect of the present invention, a method is disclosed for storing data available on a first device on a second device over a network, the network connecting the first device with the second device, comprising by the first device:
- generating a first random session key (the random session key is preferably symmetric);
- encrypting at least a first part of the data based on the first random session key;
- encrypting the first random session key based on a public encryption key;
- transmitting the encrypted first part of the data and the encrypted first random session key to the second device for storing on the second device.

The public encryption key could be retrieved once, or could be known beforehand by the first device, e.g. it could be hardcoded.

The first device can be a computer. The second device can be a data storage server. This data storage can be present in the cloud, i.e. on the internet. A data storage server may represent a single server or a plurality of aggregated data storage servers which are virtually linked together.

The public encryption key can be predetermined together with a number of P private keys of a set of P partial decryption devices, such that information encrypted with the public encryption key can be decrypted based on only T out of the P (T<=P) private keys. P and T can be predetermined.

According to preferred embodiments, the method further comprises generating a plurality of N (being an natural number) different randomly generated session keys, encrypting a set of N disjoint parts of the data based on the respective keys of the plurality of random session keys, encrypting each of the set of random session keys based on the public encryption key; and transmitting the encrypted N parts of data and their encrypted N random session keys to the second device for storing on the second device.

According to preferred embodiments, the method further comprises transmitting a non-encrypted part of the data to the second device.

According to preferred embodiments, the transmission(s) towards the second device is/are performed over a secure data communication (e.g. Secure Socket Layer (SSL)).

According to preferred embodiments, the first part of the data as well as any of the other N-1 parts of the data correspond to fields within a data file, each field corresponding to respective types of information content within the data file.

When encryption and decryption are performed on a per field basis, meaning that each disjoint data part can be encrypted or decrypted completely independently of the other data parts, a fully granular access control is possible to a data file.

According to preferred embodiments, the method further comprises authenticating the first device to store data on the second device. The authentication may comprise:
- authenticating the first device with an authentication device;
- receiving a token from the authentication device;
- forwarding the token to the second device before or together with transmitting the encrypted first part of the data and the encrypted first random session key to the second device.

It should be noted that the first device according to the first aspect of the present invention, can be the same device as the first device according to the second aspect of the present invention, but it can be another device. It is an advantage that a large amount of actors/users can safely enter data into the system and access it in a controlled way, independent on which specific (first) device they are working.

According to a third aspect of the present invention, a device is disclosed for retrieving data available on a second device, comprising
- a means for sending a read request to the second device, the read request comprising data identification information;
- a means for receiving encrypted data associated to the data identification information, the encrypted data being encrypted by means of a first random session key, from the second device;
- a means for receiving an encrypted first random session key, the first random session key being encrypted by means of a public encryption key;
- a means for transmitting the encrypted first random session key to a plurality P (of at least two) partial decryption devices for performing partial decryption by each of the partial decryption devices, the decryption based on a respective private key stored in each of the partial decryption servers;
- a means for receiving respective partial decryptions of the first random session key from at least T of the P partial decryption servers;
- a means for deriving the first random session key, based on the received respective partial decryptions;
- a means for decrypting the received encrypted data, based on the derived first random session key.

According to a fourth aspect of the present invention, a device is described for storing data on second device over a network, the network connecting the first device with the second device, comprising
- a means for generating a first random session, preferably symmetric, key;
- a means for encrypting at least a first part of the data based on the first random session key;
- a means for encrypting the first random session key based on a public encryption key;
- a means for transmitting the encrypted first part of the data and the encrypted first random session key information to the second device for storing on the second device.

The device may comprise also a means for receiving a public encryption key. The public encryption key can also be available beforehand to said device, e.g. it could be hardcoded.

The devices according to the third and fourth aspect of the present invention may further comprise means for performing any of the steps as described for the first and second aspect respectively. Features described for any of the aspects may are also applicable to on or more of the other aspects, as the skilled person would recognize.

According to a fifth aspect of the present invention, a computer program is disclosed comprising coding means for performing a method to the first or the second aspect, when run on a computer.

Further aspects of the present invention are described by the dependent claims. The features from the dependent claims, features of any of the independent claims and any features of other dependent claims may be combined as considered appropriate to the person of ordinary skill, and not only in the particular combinations as defined by the claims.

### Brief description of the drawings

The accompanying drawings are used to illustrate embodiments of the present invention.
Fig. 1 and Fig 2 illustrate embodiments according to the present invention, for writing data into a semi trusted data storage system.
Fig. 3 and Fig. 4 illustrate embodiments according to the present invention, for reading data from said semi trusted data storage system.
Fig. 5 illustrates an example architecture for a system for writing data into the semi trusted data storage system.
Fig. 6 illustrates an example architecture for a system for reading data from the semi trusted data storage system.

Reference signs are chosen such that they are the same for similar or equal elements or features in different figures or drawings.

### Description of illustrative embodiments

The above and other advantageous features and objects of the invention will become more apparent and the invention will be better understood from the following detailed description when read in conjunction with the respective drawings.

The description of aspects of the present invention is performed by means of particular embodiments and with reference to certain drawings but the invention is not limited thereto. Depicted figures are only schematic and should not be considered as limiting.

According to aspects of the present invention, an architecture and a method to write, access and store encrypted data in a remote location is disclosed.

The system typically comprises the following system elements;
- a database server (second device)
- a number P of partial decryption servers
- a set of users and associated user devices (first devices) that have to read and modify the data stored in the database

Method aspects of the present invention disclose:
- an authorized user can encrypt and write data to the database
- an authorized user can obtain encrypted data from the database and decrypt it with the help of T partial decryption servers, where T≤N is a system parameter.

Typically, the database server and the partial decryption servers may be Semi Trusted Third Parties.

The systems according to the present invention preferably also comprise an user and access management device, which is used to control and allow access to the data. Moreover, authenticated and encrypted tunnels (e.g. SSL tunnels) are typically set up between the respective network elements.

According to preferred embodiments of the present invention a (T,N) threshold encryption algorithm is used. An example of such algorithms is disclosed for instance in "Threshold cryptosystems", Yvo G. Desmedt, Yair Frankel, Springer-Verlag, 1989.

According to an example embodiment, the methods can comprise the following algorithms:
- KeyGen: generates P private keys, 1 public encryption key and other system parameters
- Encrypt: encrypts a message using a public encryption key
- ShareDecrypt: computes a partial decryption of a message using a private key
- Combine: combines an encrypted message and T partial decryptions of this message to output the message in unencrypted format.

During setup, the KeyGen algorithm is run. The P distinct private keys are sent to the P partial decryption servers. The system public encryption key is sent to all users.

Moreover, a symmetric encryption scheme is preferably chosen to encrypt the data.

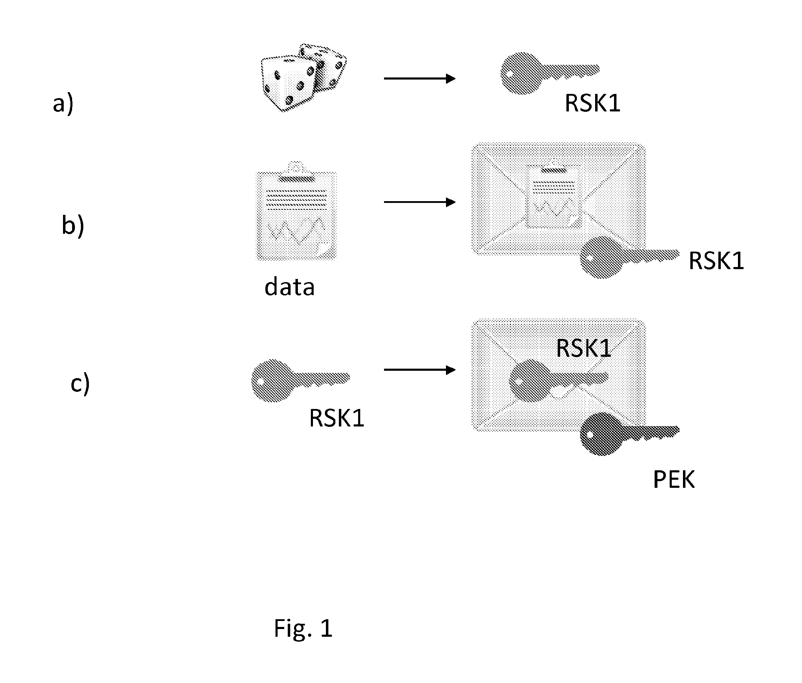

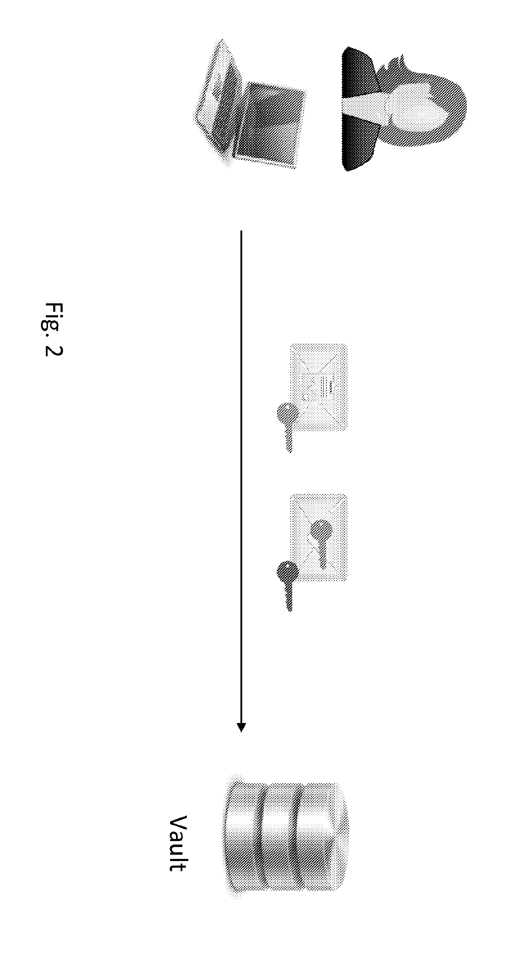

When a user wants to write data into the database, the following actions can for instance be performed (Fig. 1 and Fig. 2):
- The user generates at random a symmetric encryption key (step (a), RSK1) locally on his computer. The user can for instance be a nurse or physician who wants to write data into the data server (Vault).
- The user encrypts the data with this symmetric encryption key using the predetermined, preferably symmetric encryption scheme (step(b));
- The user encrypts the symmetric encryption key RSK1 with the system public encryption key (PEK) using the Encrypt algorithm of the threshold encryption scheme (step (c));
- The user sends the encrypted data and the encrypted key to the database, e.g. the dataserver in the cloud which is not under control of the user(Fig. 2);
- The database server checks that the user has the right to write the data (for instance by means of the user and access management system; the user and access management system may be a computer/server under control of a third part different from the user or the dataserver. The user and access management server may be under control of the government for instance, which would like to control the access to data, e.g. medical files, on a data server within the cloud, which it does not control). The access rights of the user are hereby checked. For instance it may be checked whether the user may write information in certain data field comprised in the data. If the user is authorized, the database server writes the encrypted data and the encrypted key in the database. It may occur that the user wants to write data in fields to which he has access, and to fields to which he does not have access. This may result in writing only the fields for which he has access rights.

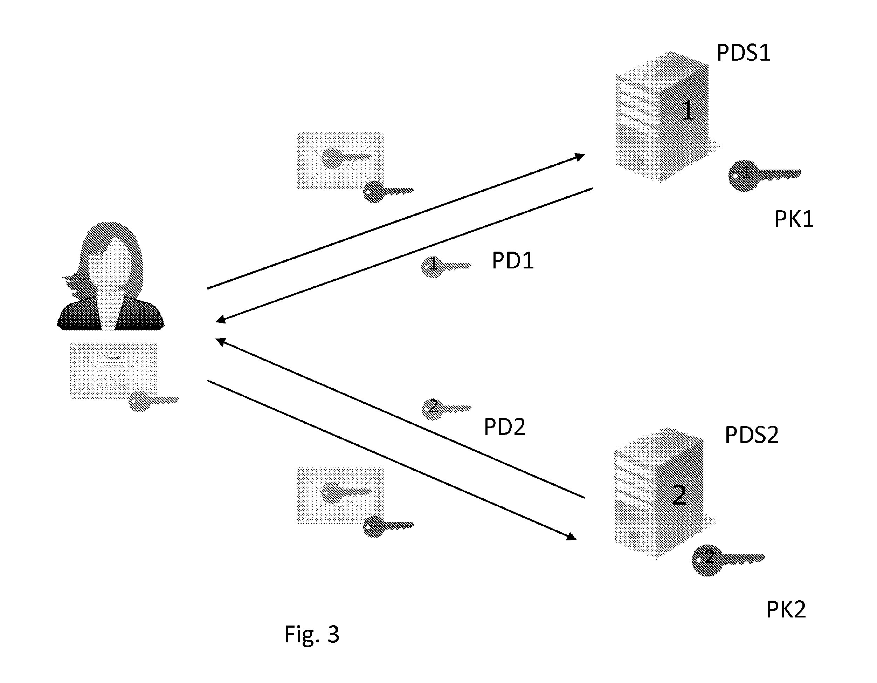

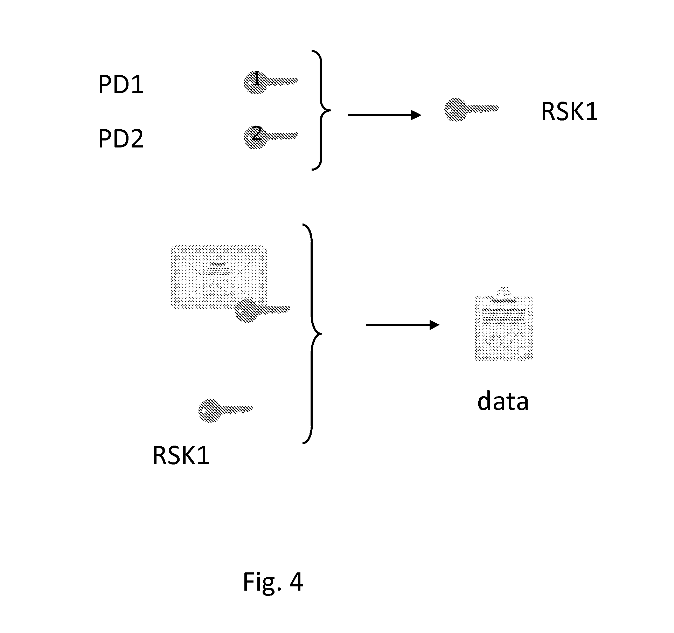

When a user, e.g. another nurse of physician, wants to read data from the database, the following actions can for instance take place:
- the user sends a read request to the database server for predetermined data , for instance corresponding to part of a medical file of a patient (from a (e.g. another first device));
- if the user is authorized, which is to be checked with a user and access management server (under control of a third party) the database server sends the encrypted data and the encrypted session key to the user;
- the user sends the encrypted session key to at least T partial decryption servers (see Fig. 3, PDS1, PDS2); each partial decryption server computes a partial decryption (PD1, PD2) of the encrypted session key using the ShareDecrypt algorithm and its private key;
- each partial decryption server sends the partially decrypted key (PD1, PD2) to the user;
- the user combines T partially decrypted keys (PD1, PD2) and the encrypted key to recover the session key (RSK1) with the Combine algorithm (Fig. 4 (top)).
- the user decrypts the encrypted data with the session key (RSK1) using the chosen symmetric encryption scheme for the data (Fig. 4 (bottom)).

The partial decryption servers may each be controlled by different independent entities. For instance in the case of the nurse/physician who wants to write data into the database of the dataserver, for instance two partial decryption servers may comprise or consist of a user and access management server under control of the government and a server under control of an association of physicians; The user will only get any information out of the received information received from the data server, if both the partial decryptions are received from the user and access management server and the other server. Also different controlling/participating entities or server may be involved, over which the trust is virtually distributed. By additionally making use of a threshold encoding scheme, the mechanism is further made more reliable and fault-tolerant.

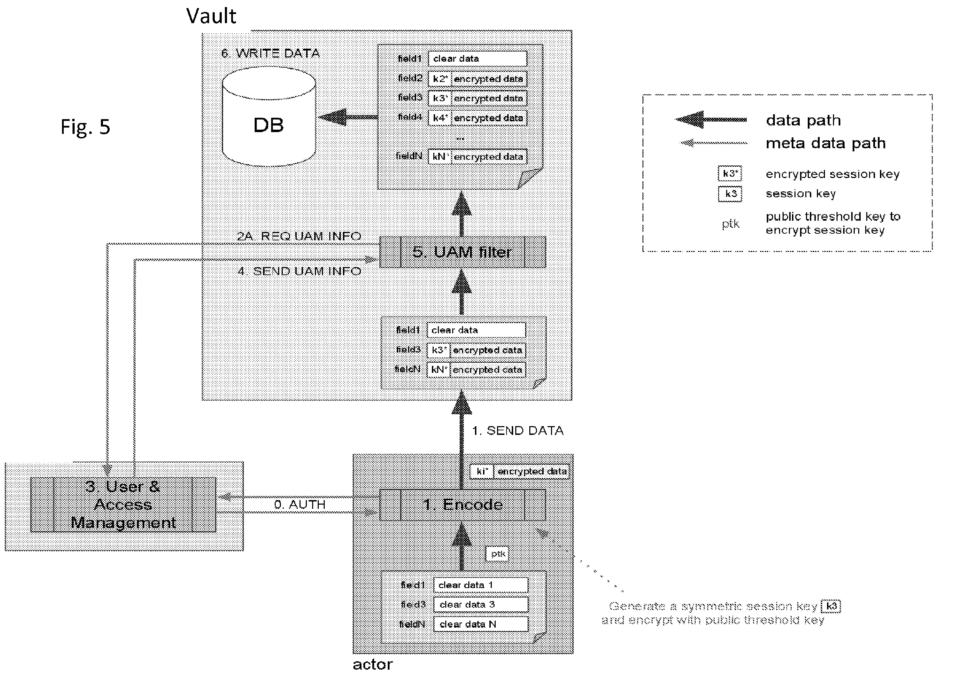

In Figure 5 a more detailed system architecture and flow for reading and writing into a database are illustrated.

Figure 5 illustrates a flow for writing data;
Step 0: Actor/user authenticates himself to the User and Access Management (UAM) system, and received a token (more generally: identification means);
Step 1: Actor/user sends encrypted data, encrypted key and write request to the Vault, together with the token.

Alternatively, Actor/user can send unencrypted data and write request to the Vault, together with the token.

Step 2: Vault now has identified the user, and sends a UAM information request to the UAM system, thereby checking the access rights of the user.

Step 3: UAM system processes the request.

Step 4: UAM system sends response to Vault.

Step 5: Vault uses UAM filter to decide whether to accept the write request or not.

Step 6: If write request is accepted, Vault writes the (e.g. pair of) encrypted data and encrypted key (alternatively, the unencrypted data) to the database.

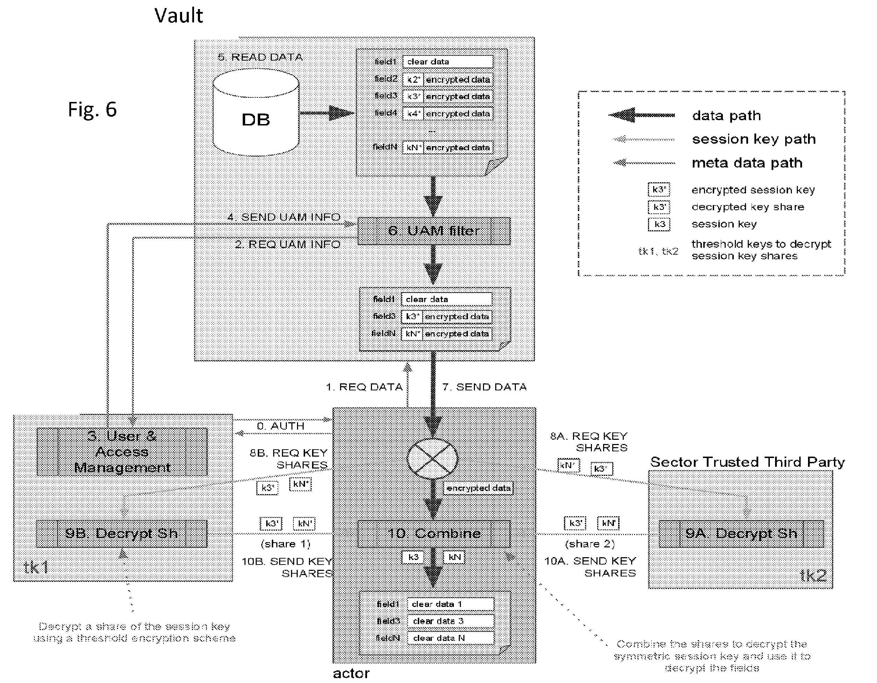

Figure 6 illustrates a flow for reading data:
Step 0: Actor/user authenticates himself to the User and Access Management (UAM) system, and thereby receives an identification means as for instance a token.
Step 1: Actor/user sends a data request to the Vault, together with the identification means. The Vault now has identified the user.
Step 2: Vault sends a UAM information request to the UAM system, in order to retrieve for instance access rights for the user to different parts of the database, or parts of datafiles, e.g. data fields.
Step 3: UAM system processes the request.
Step 4: UAM system sends response to Vault.
Step 5: Vault reads the data (in the form of unencrypted data or in the form of a pair of encrypted data and encrypted key) from the database.
Step 6: Vault uses UAM filter to decide whether to accepts read request or not.
Step 7: Vault sends data to the actor/user.
Step 8: If data is in the form of a pair of encrypted data and encrypted key, actor/user sends the encrypted key to the partial decryption servers.
Step 9A and 9B: Each partial decryption server computes a partial decryption of the encrypted key using its private key. Step 10A and 10B: Each partial decryption server sends the partial decryption of the encrypted key to the actor/user. Step 11: The actor/user combines the partial decryptions of the encrypted key to obtain the session key, then decrypts the encrypted data with the session key to obtain the data.

The skilled person will appreciate that embodiments of the present invention allow that the complete encryption process can take place locally on a user device.

The, typically confidential, data also never appears in unencrypted text, except at the authorized user level.

Also the database server does not have access to the data in unencrypted text. This implies that the database server can be located in the cloud/internet for better performance and reduced cost, without the need for elevated levels of trust. If an attacker simultaneously compromises the database server and T-1 partial decryption servers, the attacker cannot obtain the data in unencrypted format (or even learn any information about the data), as T partial decryptions are needed for being able to decrypt the session key. Also the partial decryption servers never need to access the data itself (not even encrypted data); they only process encrypted keys. In fact, the partial decryption servers need to store one private decryption key each; they do not need to store other keys. The system may also be very robust to failure of one or more of the partial decryption servers; the system remains functional even if up to P-T, (P and T being preset system parameters, for instance being 2 and 2) are unavailable. It is also perfectly scalable. Theoretically there is no limit on the number of possible users/actors.

Moreover it will be recognized that aspects of the present invention provide many advantages with respect to prior art methods and devices, some of which are described below.

Usually, when databases are encrypted, encryption and decryption are performed at the database server itself, meaning that the database server has access to the keys and to the content in unencrypted format. Compared to traditional database encryption systems, aspects of the invention comprise at least two advantages:
- They allow distributing the trust amongst several trusted parties with different interests. This is desirable in an environment where users are reluctant to trust one single third party.
- They allow preventing that the trusted parties obtain the unencrypted data.

Compared to a system which would store session keys, the invention requires less storage.

Compared to alternatives using conventional encryption techniques, the invention requires less storage, less computation, and less message complexity.

Another advantage of embodiments of the present invention is that when a party desires to count the usage of its data by different users, e.g. for the economic purpose of charging that usage, the system can guarantee to that party that all usage of data will be accounted for directly in a system controlled by that party.

Another advantage may be that if data needs to be destroyed, destroying or bringing in safe environment of one master key may suffice to prohibit access to the information.

It will be appreciated also that when it is required to fulfill multiple conditions or constraints before access to certain data can be given, the system can perform these controls without integration of these controls and constraints in a single user and access subsystem.

In the description of certain embodiments according to the present invention, various features are sometimes grouped together in a single embodiment, figure, or description thereof for the purpose of aiding in the understanding of one or more of the various inventive aspects. This is not to be interpreted as if all features of the group are necessarily present to solve a particular problem. Inventive aspects may lie in less than all features of such a group of features present in the description of a particular embodiment.

While some embodiments described herein include some but not other features included in other embodiments, combinations of features of different embodiments are meant to be within the scope of the invention, and form different embodiments, as would be understood by the skilled person.

While the principles of the invention have been set out above in connection with specific embodiments, it is to be clearly understood that this description is merely made by way of example and not as a limitation of the scope of protection which is determined by the appended claims.

## Claims

1. A method for retrieving data available on a second device by a first device, comprising
- sending a read request to said second device, said read request comprising data identification information;
- receiving encrypted data associated to said data identification information, said encrypted data being encrypted by means of a first random session key, from said second device;
- receiving an encrypted first random session key, said first random session key being encrypted by means of a public encryption key ;
- transmitting said encrypted first random session key to a plurality P (of at least two) partial decryption devices for performing partial decryption by each of said partial decryption devices, said decryption based on a respective private key stored in each of said partial decryption servers;
- receiving respective partial decryptions of said first random session key from at least T of said P partial decryption servers;
- deriving the first random session key, based on the received respective partial decryptions;
- decrypting said received encrypted data, based on said derived first random session key.

2. A method according to claim 1, further comprising authenticating said first device to access said second device.

3. A method according to claim 2, wherein authenticating comprises:
- authenticating said first device with an authentication device;
- receiving a token from said authentication device;
- forwarding said token to said second device before or together with sending said read request.

4. A method according to any of the previous claims,
wherein said public encryption key is of the threshold encryption type.

5. A method according to claim 4, wherein the relation between said public encryption key and P private keys of said partial decryption devices is predetermined such that the session key can be decrypted based on only T out of said P private keys.

6. A method according to claim 5, wherein P equals T.

7. A method according to claim 6, wherein P equals two and T equals two.

8. A method for storing data available on a first device on a second device over a network, said network connecting said first device with said second device, comprising by said first device:
- generating a first random session key;
- encrypting at least a first part of said data based on said first random session key;
- encrypting said first random session key based on a public encryption key;
- transmitting said encrypted first part of said data and the encrypted first random session key to said second device for storing on said second device.

9. A method according to claim 8, further comprising generating a plurality of N different randomly generated session keys, encrypting a set of N disjoint parts of said data based on said respective keys of said plurality of random session keys, encrypting each of said set of random session keys based on said public encryption key; and transmitting said encrypted N parts of data and their encrypted N random session keys to said second device for storing on said second device.

10. A method according to any of the claims 8 to 9, further comprising transmitting a non-encrypted part of said data to said second device.

11. A method according to any of the claims 8 to 10, wherein said transmissions towards said second device is performed over a secure data communication.

12. A method according to any of the claims 8 to 11, wherein said first part of said data as well as any of the other N parts of said data correspond to fields within a data file, each field corresponding to respective types of information content within said data file.

13. A device for retrieving data available on a second device, comprising
- a means for sending a read request to said second device, said read request comprising data identification information;
- a means for receiving encrypted data associated to said data identification information, said encrypted data being encrypted by means of a first random session key, from said second device;
- a means for receiving an encrypted first random session key, said first random session key being encrypted by means of a public encryption key;
- a means for transmitting said encrypted first random session key to a plurality P (of at least two) partial decryption devices for performing partial decryption by each of said partial decryption devices, said decryption based on a respective private key stored in each of said partial decryption servers;
- a means for receiving respective partial decryptions of said first random session key from at least T of said P partial decryption servers;
- a means for deriving the first random session key, based on the received respective partial decryptions;
- a means for decrypting said received encrypted data, based on said derived first random session key.

14. A device for storing data on second device over a network, said network connecting said first device with said second device, comprising
- a means for generating a first random session key;
- a means for encrypting at least a first part of said data based on said first random session key;
- a means for encrypting said first random session key based on a public encryption key;
- a means for transmitting said encrypted first part of said data and the encrypted first random session key information to said second device for storing on said second device.

15. A computer program comprising coding means for performing a method according to any of the claims 1 to 7, or 8 to 12, when run on a computer.
